Europäisches Patentamt

European Patent Office

Office européen des brevets

(11) Veröffentlichungsnummer: **0 220 634 B1**

# (12) EUROPÄISCHE PATENTSCHRIFT

(45) Veröffentlichungstag der Patentschrift: **24.04.91**

(51) Int. Cl.⁵: **B29C 33/24**

(21) Anmeldenummer: **86114456.6**

(22) Anmeldetag: **18.10.86**

(54) **Schliesseinheit für Formwerkzeuge, insbesondere solchen für die Herstellung von Polyurethan-Formteilen.**

(30) Priorität: **31.10.85 DE 3538683**

(43) Veröffentlichungstag der Anmeldung:
**06.05.87 Patentblatt 87/19**

(45) Bekanntmachung des Hinweises auf die
Patenterteilung:
**24.04.91 Patentblatt 91/17**

(84) Benannte Vertragsstaaten:
**DE FR GB IT**

(56) Entgegenhaltungen:
**EP-A- 0 150 487**
**DE-U- 8 518 791**
**GB-A- 2 126 154**
**US-A- 3 362 733**
**US-A- 3 663 027**

(73) Patentinhaber: **MASCHINENFABRIK HENNEK-KE GMBH**
**Postfach 1180**
**W-5205 St. Augustin 1(DE)**

(72) Erfinder: **Proksa, Ferdinand, Dr.**
**Am Arenzberg 9**
**W-5090 Leverkusen 1(DE)**
Erfinder: **Sulzbach, Hans-Michael, Dipl.-Ing.**
**Hermann-Löns-Strasse 12**
**W-5330 Königswinter 21(DE)**
Erfinder: **Röhrig, Lothar**
**Frankfurter Strasse 142**
**W-5202 Hennef 1(DE)**
Erfinder: **Fuhrbach, Hans-Wilhelm, Dipl.-Ing.**
**Königswinterer Strasse 630**
**W-5300 Bonn-Oberkassel(DE)**

(74) Vertreter: **Müller, Heinz-Gerd, Dipl.-Ing. et al**
**BAYER AG Konzernverwaltung RP Patentab-teilung**
**W-5090 Leverkusen 1, Bayerwerk(DE)**

## Beschreibung

Die Erfindung richtet sich auf eine Schließeinheit für Formwerkzeuge gemäß Oberbegriff des Patentanspruchs 1, wie sie aus GB-A-2 126 154 bekannt ist.

Eine solche Ausführungsform wird den wesentlichen Erfordernissen gerecht. Die Ausbildung der Lagerung des Querhauptes als Kurzhubzylinder mit darin eingeschlossenen, arretierbaren Schleppkolben garantiert einen exakten Gleichlauf beim Aufreißen des Formwerkzeuges wegen der exakten Führung der Kurzhubzylinder an den Säulen; der Platzbedarf zwischen fahrbarem Querhaupt und Sockel ist in vorteilhafter Weise auf das übliche Maß beschränkt und die an sich bekannte Verwendung von Langhubzylindern für das Heben und Senken des fahrbaren Querhauptes mit daran angeordneter oberer Aufspannplatte und oberer Formwerkzeughälfte ermöglicht es, die Kraftsysteme aufgrund ihrer Trennung nach hohem und niedrigem Kraftbedarf entsprechend gering zu dimensionieren, wodurch auch das gesamte zugehörige hydraulische System entsprechend kleiner dimensioniert werden kann und schnelleres Arbeiten ermöglicht. Dies ist insbesondere für große Schließeinheiten wegen der Wirtschaftlichkeit von besonderer Bedeutung, weil durch den schnelleren Zyklus in der gleichen Zeit entsprechend mehr Zyklen zur Herstellung von Formteilen durchführbar sind. Die exakte Positionierung der Klemmstücke - und damit die einwandfreie Kraftübertragung bzw. Klemmwirkung - sind jedoch nicht sichergestellt.

Es besteht die Aufgabe, bei Schließeinheiten der eingangs genannten Art die exakte Positionierung der Klemmstücke - und damit die erforderliche Klemmwirkung - sicherzustellen.

Diese Aufgabe wird dadurch gelöst, daß der Kranz von Klemmstücken die Form eines mehrfach geschlitzten Rohres aufweist.

Dadurch wird die Montage vereinfacht; die Positionierung der einzelnen fingerartigen Klemmstücke bleibt stets erhalten und eine einwandfreie Kraftübertragung ist gesichert.

Als besonders vorteilhaft hat sich erwiesen, den Kranz von Klemmstücken mittels einer elastischen Dichtung zu einem ihn konzentrisch umgebenden, hydraulisch beaufscblagbaren Druckraum abzudichten.

Dabei besteht die Dichtung vorzugsweise aus einer elastischen Manschette oder aus einem ringförmigen, elastischen, hohlen Balg, welcher im Druckraum angeordnet ist.

Eine solche elastische Manschette besteht beispielsweise aus einer dünnen, ausreichend biegsamen Hülse aus Metall, Gummi oder einem Kunststoff, wie beispielsweise Polyurethan-Elastomer. Das gleiche gilt für den hohlen Balg.

Um eine exakte Führung der Kurzhubzylinder an den Säulen zu gewährleisten, sind sie gemäß einer weiteren besonderen Ausführungsform mit Gleitführungsansätzen versehen. Das heißt, die zu den Säulen weisenden radialen Wandungsteile der Kurzhubzylinder sind um die Säule herum über die eigentliche Wandstärke hinaus verbreitert.

Es ist auch möglich, wie bei Spritzgießmaschinen, die Säulen horizontal und den Sockel sowie das feste Querhaupt und das verfahrbare Querhaupt vertikal anzuordnen.

Dies kann aus Platzgründen oder Gründen der Handhabung manchmal vorteilhaft sein.

Die zugehörige Steuerung der Bewegungsvorgänge für einen Arbeitszyklus der Schließeinheit ist ebensowenig Gegenstand der Erfindung, wie die weitere Ausgestaltung der Kraftsysteme. Beides liegt für den Fachmann nach Kenntnis des noch später beschriebenen Funktionsablaufes aufgrund seines handwerklichen Rüstzeuges auf der Hand.

In der Zeichnung ist die neue Schließeinheit in einem Ausführungsbeispiel rein schematisch dargestellt und nachstehend näher erläutert. Es zeigen:

Fig. 1     die Schließeinheit in der Seitenansicht und im teilweisen Schnitt,

Fig. 2     einen senkrechten Schnitt gemäß Linie A-A in Fig. 3 durch einen Kurzhubzylinder und Schleppkolben in vergrößerter Darstellung

Fig. 3     einen Schnitt gemäß Linie B-B in Fig. 2,

Fig. 4     einen senkrechten Schnitt gemäß Linie C-C in Fig. 5 durch einen Kurzhubzylinder und Schleppkolben gemäß einem weiteren Ausführungsbeispiel und

Fig. 5     einen Schnitt gemäß Linie D-D in Fig. 4.

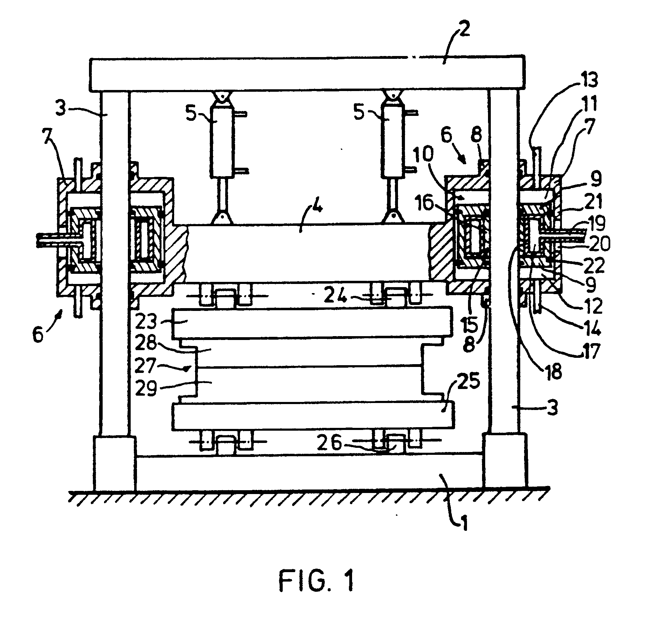

In Fig. 1 bis 3 besteht die Schließeinheit aus einem Sockel 1 und einem Querhaupt 2, zwischen denen sich zwei damit fest verbundene Säulen 3 erstrecken. An den Säulen 3 ist ein weiteres Querhaupt 4 verfahrbar gelagert und über Langhubzylinder 5 mit dem festen Querhaupt 2 verbunden. Die Lagerung 6 des Querhauptes 4 an den Säulen 3 besteht jeweils aus einem Kurzhubzylinder 7, welcher Gleitführungsansätze 8 aufweist und einen arretierbaren, als Klemmkolben ausgebildeten Schleppkolben 9 einschließt.Der Schleppkolben 9 unterteilt den Zylinderraum 10 in zwei wechselweise hydraulisch beaufschlagbare Kammern 11, 12 mit Hydraulikanschlüssen 13, 14. In jedem Schlepp- bzw. Klemmkolben 9 ist konzentrisch um die Säule 2 ein Kranz 15 von Klemmstücken 16 in Form eines mehrfach geschlitzten Rohres angeordnet. Der verbleibende Hohlraum 17 ist durch einen ringförmigen, hohlen Balg 18 aus einem Polyurethanelastomer ausgefüllt, welcher mit einem Hydraulikanschlußstutzen 19 versehen ist. Der Hydraulikanschlußstutzen 19 ist durch einen Schlitz 20 in der Wandung 21 des Kurzhubzylinders 7 nach außen geführt. Es versteht sich, daß der Schlitz 20 sich in einem gegenüber den Kammern 11, 12 durch Dichtungen 22 abgedichteten Bereich befindet. Eine obere Aufspannplatte 23 ist über Schwenklager 24 mit dem verfahrbaren Querhaupt 4 verbunden. Eine untere Aufspannplatte 25 ist über Schwenklager 26 mit dem Sockel 1 verbunden. Für die Schwenkbewegung der Aufspannplatten 23, 25 sind nicht dargestellte hydraulische Langhubzylinder vorgesehen. Das zugehörige hydraulische Steuerungssystem ist der Übersichtlichkeit halber ebenfalls nicht dargestellt. Zwischen den Aufspannplatten 23, 25 ist ein Formwerkzeug 27 angeordnet, wobei die obere Formwerkzeughälfte 28 an der oberen Aufspannplatte 23 und die untere Formwerkzeughälfte 29 an der unteren Aufspannplatte 25 befestigt sind.

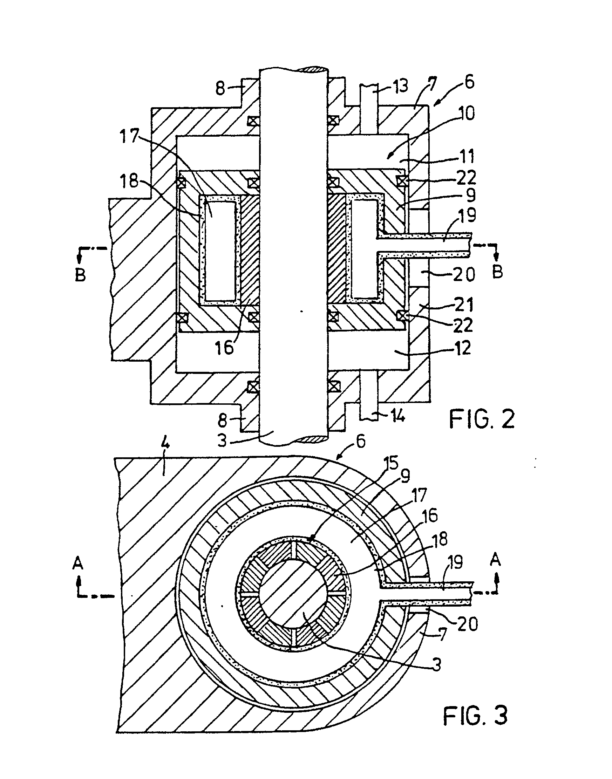

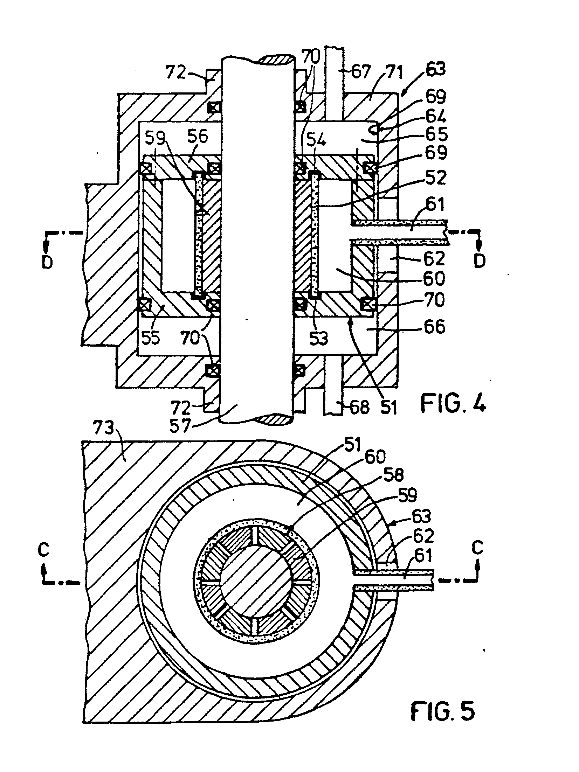

Der Aufbau des Schleppkolbens 51 gemäß Fig. 4, 5 entspricht demjenigen gemäß Fig. 2, 3 mit der Abweichung, daß anstelle des hohlen Balges eine als Hülse bzw. Manschette ausgebildete Dichtung 52 aus 0,2 mm starkem Blech vorgesehen ist. Diese Hülse bzw. Manschette 52 ist mit ihren Stirnrändern in Elastomerdichtringen 53 mit U-Querschnitt gelagert, welche in entsprechenden Nuten 54 der radialen Wandungsabschnitte 55 des Schleppkolbens 51 angeordnet sind. Zur besseren Montage ist der Schleppkolben 51 topfförmig mit aufschraubbarem Deckel 56 ausgebildet. Zwischen Hülse bzw. Manschette 52 und Säule 57 ist ein Kranz 58 von Klemmstücken 59 vorgesehen. Der im Schlepp- bzw. Klemmkolben 51 verbleibende Hohlraum 60 ist mit einem Hydraulikanschlußstutzen 61 versehen, welcher durch einen Schlitz 62 des Kurzhubzylinders 63 nach außen geführt ist. Auch hier ist der Hohlraum 64 des Kurzhubzylinders 62 durch den Schleppkolben 51 in zwei Hydraulikkammern 65, 66 unterteilt, welche Hydraulikanschlußstutzen 67, 68 aufweisen. Der Schleppkolben 51 ist gegen die Innenwandung 69 des Kurzhubzylinders 62 und gegen die Säule 57 durch Dichtungen 70 abgedichtet. Die radialen Wandungsteile 71 des Kurzhubzylinders 63 sind mit Gleitführungsansätzen 72 versehen und weisen in diesem Bereich ebenfalls gegen die Säule wirkende Dichtungen 70 auf.

Funktionsbeschreibung

Verwendet wird die Schließeinheit gemäß Fig. 1 bis 3 zur Herstellung eines Polyurethan-Schaumstoffteiles.

Die Schließeinheit nimmt zunächst den Öffnungszustand für das Formwerkzeug 27 ein. Das heißt, die Langhubzylinder 5 haben das fahrbare Querhaupt 4 in die obere Position gezogen, so daß der Formhohlraum offen liegt. Nun führt das Bedienungspersonal die für die Formteilherstellung erforderlichen Vorbereitungen durch. Sodann werden die Langhubzylinder 5 in der Weise beaufschlagt, daß das Querhaupt 4 mit der daran befestigten Aufspannplatte 23 und der oberen Formhälfte 28 abgesenkt wird, bis letztere auf der unteren Formwerkzeughälfte 27 aufliegt. Während dieses Vorganges sind die Schleppkolben 9 nicht arretiert. Bei dem Absenkvorgang sind sie von den Kurzhubzylindern 7 mitgenommen worden und liegen an deren oberen radialen Wandungsteilen an. Durch hydraulische Beaufschlagung der Kammern 11 werden die Schleppkolben 9 etwas nach unten gefahren, was alternativ auch während des Absenkens mittels Langhubzylinder erfolgen kann.

Anschließend werden durch Druckbeaufschlagung der Bälge 18 die Kränze 15 aus Klemmstücken 16 gegen die Säulen 3 angepreßt und damit arretiert. Nun werden die Druckräume 12 beaufschlagt, so daß das Querhaupt mit der vorgegebenen Schließkraft über die Aufspannplatte 23 die beiden Formwerkzeughälften 28, 29 zusammenpreßt. Sodann wird in einer nicht dargestellten Mischvorrichtung, deren nicht dargestellter Mischkopf an dem Formwerkzeug 27 angebaut ist, ein Polyurethan-Reaktionsgemisch erzeugt und in den Formhohlraum eingefüllt. Nach dem Aushärten des Formteiles werden die Druckräume 11 hydraulisch beaufschlagt, so daß durch das damit verbundene Emporheben des fahrbaren Querhauptes 4 das Formwerkzeug aufgerissen wird. Anschließend wird die Arretierung der Schleppkolben 9 entlastet und gleichzeitig die Langhubzylinder 5 mit Druck beaufschlagt, so daß das Querhaupt 4 mit Aufspannplatte 23 und oberer Formwerkzeughälfte 28 nach oben fährt. Während dieses Ablaufes werden die Schleppkolben 9 von den Kurzhubzylindern 7 mit nach oben gezogen. Zur leichteren Entnahme des Formteils werden die Formwerkzeughälften 28, 29 um die Schwenkachsen 24, 26 gekippt. Nach der Reinigung des Formwerkzeughohlraumes werden die Formwerkzeughälften 28, 29 zurückgeschwenkt und ein neuer Zyklus kann beginnen.

Ansprüche

1. Schließeinheit für Formwerkzeuge, insbesondere solche für die Herstellung von Polyurethan-Formteilen, bestehend aus einem Sockel (1), welcher über mindestens zwei Säulen (3; 57) mit einem Querhaupt (2) fest verbunden ist; einer am Sockel (1) angeordneten unteren Aufspannplatte (25); und einer oberen, an einem an den Säulen (3; 57) fahrbar gelagerten Querhaupt (4; 73) angeordneten Aufspannplatte 23); wobei die Aufspannplatten (23,25) zueinander weisen, und wobei die Lagerung (6) des fahrbaren Querhauptes (4; 73) jeweils aus einem eine Säule (3; 57) umschließenden Hydraulikzylinder (7; 63) besteht, in welchem ein die Säule (3; 57) umgebender, als Klemmkolben (9; 51) ausgebildeter, anpreßbare Klemmstücke (16; 59) in Form eines Kranzes (15; 58) enthaltender, arretierbarer Schleppkolben (9; 51) angeordnet ist, und der Hydraulikzylinder (7; 63) aus einem Kurzhubzylinder (7; 63) besteht, wobei zwischen dem festen Querhaupt (2) und dem fahrbaren Querhaupt (4; 73) Langhubzylinder (5) für den Absenk- und Abhebevorgang der oberen Aufspannplatte (23) zugeordnet sind, dadurch gekennzeichnet, daß der Kranz (15; 58) von Klemmstücken (16; 59) die Form eines mehrfach geschlitzten Rohres aufweist.

2. Schließeinheit nach Anspruch 1, dadurch gekennzeichnet, daß der Kranz (15; 58) von Klemmstücken (16; 59) mittels einer elastischen Dichtung (18; 53) zu einem ihn konzentrisch umgebenden, hydraulisch beaufschlagbaren Druckraum (17; 60) abgedichtet ist.

3. Schließeinheit nach Anspruch 2, dadurch gekennzeichnet, daß die Dichtung (53) aus einer elastischen Manschette besteht.

4. Schließeinheit nach Anspruch 2, dadurch gekennzeichnet, daß die Dichtung (18) aus einem ringförmigen, elastischen, hohlen Balg (18) besteht, welcher im Druckraum (17) angeordnet ist.

5. Schließeinheit nach einem der Ansprüche 1 bis 4, dadurch gekennzeichnet, daß der Kurzhubzylinder (7; 63) mit Gleitführungsansätzen (8; 72) versehen ist.

6. Schließeinheit nach einem der Ansprüche 1 bis 5, dadurch gekennzeichnet, daß die Säulen (3; 57) horizontal und der Sockel (1) sowie das feste Querhaupt (2) und das verfahrbare Querhaupt (4; 73) vertikal angeordnet sind.

## Claims

1. Closing device for moulding tools, in particular those for the manufacture of polyurethane mouldings, consisting of a base (1), which is connected permanently to a crosshead (2) via at least two columns (3; 57); of a lower clamping plate (25) mounted on the base (1); and of an upper clamping plate (23) mounted on a crosshead (4; 73) movably mounted on the columns (3; 57); wherein the clamping plates (23, 25) face one another, and wherein the mounting (6) of the movable crosshead (4,; 73) respectively consists of a hydraulic cylinder (7; 63) enclosing a column (3; 57), in which cylinder (7; 63) a lockable traction piston (9; 51) in the form of a clamping piston (9; 51) is mounted, which surrounds the columns (3; 57) and contains clamping members (16; 59) in the form of a ring (15; 58), and the hydraulic cylinder (7; 63) consists of a short-stroke cylinder (7; 63), in which case between the fixed crosshead (2) and the movable crosshead (4; 73) long-stroke cylinders (5) for the lowering and lifting process are associated with the upper clamping plate (23), characterised in that the ring (15; 58) of clamping members (16; 59) has the form of a many-slotted tube.

2. Closing device according to claim 1, characterised in that the ring (15; 58) of clamping members (16; 59) is sealed by means of a resilient seal (18; 53) with respect to a hydraulically actuatable pressure chamber (17; 60) surrounding said ring (15; 58).

3. Closing device according to claim 2, characterised in that the seal (53) consists of a resilient sleeve.

4. Closing device according to claim 2, characterised in that the seal (18) consists of an annular, resilient, hollow bellows (18), which is mounted in the pressure chamber (17).

5. Closing device according to one of claims 1 to 4, characterised in that the short-stroke cylinder (7; 63) is provided with slide guide projections (8; 72).

6. Closing device according to one of claims 1 to 5, characterised in that the columns (3; 57) are mounted horizontally and the base (1) and the fixed crosshead (2) and the movable crosshead (4; 73) are mounted vertically.

## Revendications

1. Mécanisme de fermeture de moules, en particulier de moules pour la production de pièces en polyuréthanne, se composant d'un socle (1) qui est fixé à une traverse (2) au moyen d'au moins deux colonnes (3 ; 57) ; d'un plateau de fixation inférieur (25) disposé sur le socle (1) ; et d'un plateau de fixation supérieur (23) disposé sur un corps de presse (4 ; 73) monté sur les colonnes (3 ; 57) sur lesquelles il est déplaçable ; les plateaux de fixation (23, 25) étant tournés l'un vers l'autre et le système (6) de montage du corps de presse mobile (4 ; 73) sur chacune des colonnes (3 ; 57) se composant d'un cylindre hydraulique (7 ; 63) entourant l'une de celles-ci et logeant un piston glissant (9 ; 51) pouvant être bloqué, entourant la colonne (3 ; 57), conformé en piston de serrage (9 ; 51) et renfermant des pièces de serrage (16 ; 59) susceptibles de recevoir une poussée et ayant la forme d'une couronne (15 ; 58), et le cylindre hydraulique (7 ; 63) se composant d'un cylindre à faible course (7 ; 63), des vérins (5) situés entre la traverse fixe (2) et le corps de presse mobile (4 ; 73) étant destinés à provoquer l'abaissement et le relèvement du plateau supérieur de fixation (23), caractérisé en ce que la couronne (15 ; 58) de pièces de serrage (16 ; 59) a la forme d'un tube à fentes multiples.

2. Mécanisme de fermeture selon la revendication 1, caractérisé en ce qu'une garniture élastique (18 ; 53) assure l'étanchéité de la couronne (15 ; 58) de pièces de serrage (16 ; 59) vis-à-vis d'une chambre de compression (17 ; 60) qui l'entoure concentriquement et qui peut être alimentée en fluide hydraulique.

3. Mécanisme de fermeture selon la revendication 2, caractérisé en ce que la garniture (53) se compose d'un manchon élastique.

4. Mécanisme de fermeture selon la revendication2, caractérisé en ce que la garniture (18) se compose d'un tuyau annelé élastique annulaire (18) qui est disposé dans la chambre de compression (17).

5. Mécanisme de fermeture selon l'une des revendications 1 à 4, caractérisé en ce que le cylindre à faible course (7 ; 63) comporte des prolongements (8 ; 72) constituant des coulisseaux de guidage.

6. Mécanisme de fermeture selon l'une des revendications 1 à 5, caractérisé en ce que les colonnes (3 ; 57) sont horizontales et le socle (1) ainsi que la traverse fixe (2) et le corps de presse mobile (4 ; 73) sont disposés verticalement.

FIG. 1

FIG. 2

FIG. 3

FIG. 4

FIG. 5